# EUROPEAN PATENT APPLICATION

(11) **EP 4 790 403 A1**
(43) Date of publication of application: **12.08.2026**
(21) Application number: 25156661.8
(22) Date of filing: 07.02.2025
(51) Int. Cl.: G01N 29/032

(54) **DETERMINING THE CONCENTRATION OF RESIDUALS IN THE EFFLUENT OF A SOLID-LIQUID SEPARATION PROCESS BY ULTRASOUND**

(71) Applicant: Olpas BV, 2300 Turnhout (BE)
(72) Inventor: Gladinez, Kristof, 2340 Beerse (BE); Wouters, Jo, 2200 Herentals (BE)
(74) Representative: Ipsilon Belgium

(57) **Abstract**

Example embodiments relate to a system and a method for determining a concentration of one or more residuals (215) within an effluent flow (211) of a solid-liquid separation process based on acoustic properties of the effluent, wherein the effluent flow comprises air bubbles (212, 213, 214); the method comprising: by an ultrasonic transducer (217) that is at least partially immersed within the effluent flow, emitting (201) at least one ultrasonic pulse (221) at an emission frequency that exceeds at least one fundamental resonant frequency of the air bubbles within the effluent flow; by the ultrasonic transducer (217), receiving (202) an ultrasonic echo (226) resulting from the at least one ultrasonic pulse; wherein the ultrasonic echo comprises near-field pressure oscillations and ultrasonic backscattering; and determining (203), by a data processing unit (218), the concentration of the one or more residuals (215) based on a portion (223) of the ultrasonic echo within the ultrasonic near field (224).

## Description

### Field of the Invention

The present invention generally relates to ultrasonic concentration measurements in a solid-liquid separation process, in particular to measuring the concentration of residuals within an effluent flow of a solid-liquid separation process.

### Background of the Invention

Solid-liquid separation refers to processes for separating solid phase particles from a liquid phase within a mixture or slurry, e.g. filtration, sedimentation, centrifugation, flotation, or flocculation. These processes may be used in, for example, wastewater treatment, mining, chemical manufacturing, or food processing to remove solids from a liquid feed slurry, to remove moisture from a feed slurry, and/or to recover valuable solids from the feed slurry.

In some solid-liquid separation processes, polyelectrolyte flocculants may be added to the feed slurry to improve the separation of the solids from the liquid, e.g. in sludge dewatering. This can improve the separation process by reducing energy consumption, reducing operational costs, and providing a cleaner effluent, i.e. the liquid that remains after a mixture or slurry has undergone a separation process.

However, adding an excessive amount of polyelectrolyte flocculants results in the presence of unbound polyelectrolyte flocculants in the effluent, which is typically undesired. A high total suspended solids, TSS, content in the effluent is thus an indicator of a sub-optimal or inefficient separation process, while a large residual polyelectrolyte flocculant content is an indicator that polyelectrolyte dosing is not scaled correctly in relation to the feed slurry. As such, a reliable and accurate measurement of residuals within the effluent of a separation process is desirable.

Optical sensors, microwave sensors, or streaming current meters may be used to determine the concentration of residuals in a liquid, e.g. TSS and/or unbound polyelectrolyte flocculants. Optical sensors have the problem that they fail to accurately measure the concentrations in variable conditions due to their dependence on the optical parameters of the effluent flow., It is a further problem that optical sensors and streaming current meters are sensitive to fouling deposits that built up on their surfaces. Solutions to remove this fouling, e.g. mechanical wipers, are typically prone to faults and malfunctioning. Optical sensors and streaming current meters also tend to drift and require frequent calibration. Microwave sensors are expensive and difficult to install, in particular in larger tubing diameters.

Ultrasonic sensors can also be used to determine the concentration of residuals based on acoustic properties of a mixture, i.e. based on the ultrasonic echo resulting from emitting an ultrasonic pulse within the mixture. However, effluent flows are typically characterised by a large amount of suspended air bubbles. This is a problem as the suspended air bubbles cause strong scattering of acoustic waves, thereby substantially affecting the ultrasonic echo in an unpredictable manner. It is a further problem that the effluent typically has a high capacity for depositing fouling on the interface with the ultrasonic sensor.

### Summary of the Invention

It is an object of the present invention, amongst others, to solve or alleviate the above identified problems and challenges by improving ultrasonic sensing of residuals within an effluent flow of a liquid-separation process that comprises air bubbles.

According to a first aspect, this object is achieved by a method for determining a concentration of one or more residuals within an effluent flow of a solid-liquid separation process based on acoustic properties of the effluent, wherein the effluent flow comprises air bubbles; the method comprising:
- by an ultrasonic transducer that is at least partially immersed within the effluent flow, emitting at least one ultrasonic pulse at an emission frequency that exceeds at least one fundamental resonant frequency of the air bubbles within the effluent flow;
- by the ultrasonic transducer, receiving an ultrasonic echo resulting from the at least one ultrasonic pulse; wherein the ultrasonic echo comprises near-field pressure oscillations and ultrasonic backscattering; and
- determining, by a data processing unit, the concentration of the one or more residuals based on a portion of the ultrasonic echo within the ultrasonic near field.

The solid-liquid separation process separates solid phase particles from a liquid phase within a feed mixture or feed slurry. The liquid phase obtained after the feed mixture has undergone a solid-liquid separation process is referred to as the effluent, i.e. the separated liquid. The effluent may still comprise one or more residuals due to sub-optimal operation of the solid-liquid separation process. The one or more residuals may, for example, include suspended solid particles the process failed to separate from the liquid of the feed mixture, or polyelectrolyte flocculants that failed to bind with the solid phase particles within the feed mixture. The effluent flow thus refers to effluent that is moving, i.e. flowing, from an output of the solid-liquid separation process to another location, e.g. within tubing or a channel.

The ultrasonic transducer is at least partially immersed within this effluent flow. As such, the at least one ultrasonic pulse emitted by the immersed ultrasonic transducer travels through the effluent flow, interacts with the one or more residuals, and a portion of the ultrasonic pulse is reflected back to the ultrasonic transducer as the ultrasonic echo. The ultrasonic echo comprises an ultrasonic near field and an ultrasonic far field. The ultrasonic near field refers to the region closest to the ultrasonic transducer, where the acoustic field is dominated by complex, non-uniform behaviour characterized by constructive and destructive interference patterns. The ultrasonic far field refers to a more stable region located beyond the near field, where the pressure and intensity of the ultrasonic pulse gradually diminish as the ultrasonic wave spreads out in a conical fashion.

The at least one ultrasonic pulse is emitted at an emission frequency that exceeds at least one fundamental resonant frequency of the air bubbles within the effluent flow. This avoids harmonic resonance of the air bubbles that results in variable and unpredictable backscattering of the ultrasonic pulse by the air bubbles. In doing so, a more stable and more predictable backscattering of the air bubbles is achieved and, thus, a more stable and more predictable effect of the air bubbles on the ultrasonic echo. In other words, the interference of the air bubbles within the ultrasonic echo becomes more stable and predictable by emitting the ultrasonic pulse at an emission frequency above the fundamental resonant frequency of the air bubbles. This has the advantage that it allows accounting for the interference of the air bubbles more easily when determining the concentration of the one or more residuals from the ultrasonic echo. In other words, it allows determining the concentration of one or more residuals based on acoustic properties of the effluent flow accurately even in the presence of air bubbles.

As the resonant frequency of air bubbles decrease with increasing size, the emission frequency of the at least one ultrasonic pulse may preferably exceed the fundamental resonant frequency associated with the most common air bubble size within the effluent flow. More preferably, the emission frequency may exceed the fundamental resonant frequency associated with the smallest air bubble size within the effluent flow. In doing so, the emission frequency also exceeds the resonant frequency of the larger air bubbles and, thus, of all air bubbles within the effluent flow. The air bubbles within the effluent flow may, for example, have a size of at least around 1 micron to at most around 1000 microns.

The scattering of the ultrasonic pulse is more significant in the far field. As such, less energy will be reflected back to the ultrasonic transducer by air bubbles in the far field. In other words, an echo originating from the far field experiences relatively more scattering due to air bubbles as the ultrasonic pulse travels a longer distance through the medium, resulting in a lower signal to noise ratio. Determining the concentration of the one or more residuals based on a portion of the ultrasonic echo within the ultrasonic near field thus further allows accounting for the interference of the air bubbles more easily.

According to an example embodiment, the one or more residuals within the effluent flow may include one or more polyelectrolyte flocculants, and determining the concentration of the one or more polyelectrolyte flocculants may be based on the near-field pressure oscillations within the ultrasonic echo.

Polyelectrolyte flocculants, sometimes also referred to as polyelectrolyte coagulants, are polymers that typically have ionic charge along their chain. They are typically added to a feed mixture or feed slurry prior to a solid-separation process to bind suspended solid particles together, thereby improving the solid-liquid separation.

Unbound polyelectrolyte flocculants may still remain within the effluent flow, e.g. when an excess amount of polyelectrolyte flocculants is added to the feed mixture. Determining the concentration of the unbound polyelectrolyte flocculants may be based on the near-field pressure oscillations within the ultrasonic echo, as the unbound polyelectrolyte flocculants influence the ultrasonic near field considerably due to their long chain length, viscoelastic properties, and ionic charge. Thus, the local acoustic interference pattern that is characteristic for the ultrasonic transducer is influenced by the presence of unbound polyelectrolyte flocculants in the ultrasonic near field. In other words, the presence of unbound polyelectrolyte flocculants shifts and modifies the local interference patterns within the ultrasonic echo. This change in the local interference pattern allows to determine the concentration of the polyelectrolyte flocculants in the effluent flow.

According to an example embodiment, the ultrasonic transducer may be responsive to frequencies attenuated by the one or more polyelectrolyte flocculants.

In other words, the ultrasonic transducer may be particularly sensitive to changes in frequencies within the near-field pressure oscillations that are affected by the presence of unbound polyelectrolyte flocculants within the effluent flow. Relatively higher frequencies may have a more pronounced attenuation.

According to an example embodiment, the one or more residuals within the effluent flow may include one or more suspended solid particles, and determining the concentration of the one or more suspended solid particles may be based on the ultrasonic backscattering within the ultrasonic near field of the ultrasonic echo.

Thus, the concentration of suspended solid particles within the effluent flow may be determined based on the ultrasonic backscattering of the ultrasonic echo within the ultrasonic near field. The concentration of suspended solid particles may refer to a concentration of the solid phase in the effluent flow, substantially independent of the particle size distribution. This allows monitoring the efficiency of a liquid-separation process as the concentration of suspended solid particles in the effluent flow is indicative of the process' effectiveness in separating the solid and liquid phases. It is thus an advantage that this can allow improving the efficiency of a solid-liquid separation process thereby reducing operational costs and potential loss of valuable solids.

According to an example embodiment, a wavelength of the at least one ultrasonic pulse may be at least equal to a size of the one or more suspended solid particles.

This ensures effective scattering of the ultrasonic pulse by the one or more suspended particles and ensures that the backscattering can be received by the ultrasonic transducer.

According to an example embodiment, the method may further comprise, by the ultrasonic transducer, emitting a first ultrasonic pulse at a first emission frequency for determining the concentration of the one or more polyelectrolyte flocculants; and emitting a second ultrasonic pulse at a second emission frequency for determining the concentration of the one or more suspended solid particles.

Thus, ultrasonic pulses at two distinct emission frequencies may be emitted to determine the concentration of unbound polyelectrolyte flocculants and suspended solid particles within the effluent flow, respectively. These ultrasonic pulses may, for example, be emitted alternately. The first and second ultrasonic pulse may be emitted in any order. The emission frequency of the first ultrasonic pulse may, for example, be around 15MHz. The emission frequency of the second ultrasonic pulse may, for example, be around 10MHz. It is an advantage that a single ultrasonic transducer can transmit both pulses and receive both echoes. Alternatively, two different ultrasonic transducers may be used.

According to an example embodiment, the method may further comprise, by the ultrasonic transducer, repeatedly emitting ultrasonic pulses at inter-pulse intervals; wherein the inter-pulse intervals have a sufficient length as to avoid interference between the respective ultrasonic pulses and the ultrasonic echo resulting from a preceding ultrasonic pulse.

Repeatedly emitting an ultrasonic pulse allows to monitor the evolution of the concentration of the one or more residuals within the effluent flow in time. Repeatedly emitting an ultrasonic pulse at the first emission frequency alternating with an ultrasonic pulse at the second emission frequency further allows to monitor both the concentration of unbound polyelectrolyte flocculants and suspended solid particles within the effluent flow in time.

By separating the successively emitted ultrasonic pulses by the inter-pulse interval, substantial overlap between the respective ultrasonic echoes can be avoided. A sufficient length for the inter-pulse intervals may, for example, be 1ms. This has the further advantage that the ultrasonic power emitted within the effluent flow remains limited, thereby avoiding substantially affecting the properties of the effluent.

According to an example embodiment, the method may further comprise, by the data-processing unit, omitting a first period of the ultrasonic echo indicative for fouling deposits on the surface of the ultrasonic transducer.

The first period of the ultrasonic echo, i.e. directly following the reception of the ultrasonic pulse, may correspond to fouling deposits on the immersed surface of the ultrasonic transducer. Omitting or ignoring this first period therefore allows accurately determining the concentration of one or more residuals within the effluent flow regardless of fouling deposits that built up on the ultrasonic transducer surface. This has the advantage that cleaning and/or maintenance of the ultrasonic transducer is limited, e.g. compared to optical sensors or microwave sensors. The first period may, for example, include the echo received within the first 10µs directly after receiving the ultrasonic pulse.

According to an example embodiment, the determining may further comprise determining a power spectrum of the portion of the ultrasonic echo and comparing the power spectrum with one or more power spectra indicative of the ultrasonic echo within effluent flows having respective predetermined concentrations of the one or more residuals.

The power spectrum is indicative for the distribution of power or variance of the ultrasonic echo across different frequencies. The portion of the ultrasonic echo within the ultrasonic near field for which the power spectrum may be determined may comprise the near-field pressure oscillations, ultrasonic backscattering, or both when determining the concentration of unbound polyelectrolyte flocculants, suspended solid particles, or both, respectively.

The one or more power spectra indicative of the ultrasonic echo within effluent flows having respective predetermined concentrations of residuals may be referred to as benchmark power spectra. The one or more benchmark power spectra may be obtained by performing a calibration or initialization during which the at least one ultrasonic pulse is emitted into an effluent flow with a predetermined concentration of the one or more residuals. This allows determining a relationship between the power spectrum of the ultrasonic echo and the concentration of the one or more residuals. This relationship may then be used to determine the concentration of one or more residuals within an effluent flow based on a measured power spectrum.

Preferably, a relationship between the spectral power of the one or more benchmark power spectra and the concentration of residuals may be used to determine the concentration of the one or more residuals. The spectral power may be linearly correlated with the concentration of the one or more residuals.

According to an example embodiment, the at least one ultrasonic pulse may be a low power ultrasonic pulse.

This has the further advantage that the ultrasonic power emitted within the effluent flow remains limited, thereby avoiding substantially affecting the properties of the effluent.

According to an example embodiment, the method may further comprise positioning the ultrasonic transducer in a gravitationally lower section of the effluent flow.

The ultrasonic transducer may thus be positioned such that the immersed portion of the ultrasonic transducer is located in a lower section of the effluent flow relative to the gravitational field of Earth, i.e. lower along the gravitational vector. For example, the ultrasonic transducer may be positioned in the lower portion of a horizontal tube through which the effluent flows substantially horizontally. In doing so, the larger air bubbles will be located further from the ultrasonic transducer due to their greater buoyancy while the smaller air bubbles are located closer to the ultrasonic transducer. As such, the air bubbles passing within the measurement zone of the ultrasonic transducer may vary less in size. This further allows accounting for the interference of the air bubbles more easily, as it reduces the variation in the size of the air bubbles that pass through the measurement zone of the ultrasonic transducer, thereby making their interference more stable and predictable.

According to an example embodiment, the method may further comprise, by the data-processing unit, detrending the spectrum of the portion of the ultrasonic echo.

This may, for example, be achieved by second-order detrending the spectral content of the portion of the ultrasonic echo within the ultrasonic near field based upon which the concentration of the one or more residuals is determined. This allows removing quadratic trends from the ultrasonic echo, thereby accounting for the more stable and predictable interference of the air bubbles within the ultrasonic echo.

According to an example embodiment, the method may further comprise, by the data-processing unit, normalizing the portion of the ultrasonic echo and/or normalizing the spectrum of the portion of the ultrasonic echo.

This allows further removing the substantially stable and predictable contribution of the air bubble interference to the ultrasonic echo within the near field.

According to a second aspect, the disclosure relates to a system configured to determine a concentration of one or more residuals within an effluent flow of a solid-liquid separation process based on acoustic properties of the effluent, wherein the effluent flow comprises air bubbles; the system comprising:
- at least one ultrasonic transducer configured to be at least partially immersed within the effluent flow, and configured to emit at least one ultrasonic pulse at an emission frequency that exceeds at least one fundamental resonant frequency of the air bubbles within the effluent flow; and wherein the ultrasonic transducer is further configured to receive an ultrasonic echo resulting from the at least one ultrasonic pulse; wherein the ultrasonic echo comprises near-field pressure oscillations and ultrasonic backscattering; and
- a data processing unit configured to determine the concentration of the one or more residuals based on a portion of the ultrasonic echo within the ultrasonic near field.

The at least one ultrasonic transducer may be any ultrasonic transducer suitable for continuous immersion in liquids, e.g. an immersion transducer. The at least one ultrasonic transducer may be substantially resistant to chemical and physical external influences.

The at least one ultrasonic transducer may further be configured to emit ultrasonic waves at a plurality of emission frequencies and receive the resulting ultrasonic echoes. This can allow to determine the concentration of several residuals by means of a single ultrasonic transducer, i.e. by emitting ultrasonic pulses at respective emission frequencies. Alternatively, the system may comprise a plurality of ultrasonic transducers specifically tuned and configured for determining the concentration of a specific residual, e.g. one transducer for monitoring polyelectrolyte flocculants and one transducer for monitoring suspended solid particles.

According to an example embodiment, the system may further comprise an ultrasonic interface module configured to drive the ultrasonic transducer by means of an electrical pulse and further configured to convert the ultrasonic echo received by the ultrasonic transducer to a digital signal.

The ultrasonic interface module may be a separate circuitry or may be integrated within the data processing unit.

### Brief Description of the Drawings

Fig. 1 shows an example of a solid-liquid separation process;
Fig. 2 shows steps of a method for determining the concentration of one or more residuals within an effluent flow of a solid-liquid separation process based on acoustic properties of the effluent, according to example embodiments;
Fig. 3 shows an example of emitted ultrasonic pulses in time, according to embodiments;
Fig. 4 shows further steps for determining the concentration of one or more residuals within an effluent flow of a solid-separation process based on acoustic properties of the effluent, according to embodiments; and
Fig. 5 shows a system configured to determine a concentration of one or more residuals within an effluent flow of a solid-liquid separation process based on acoustic properties of the effluent, according to example embodiments.

### Detailed Description of Embodiment(s)

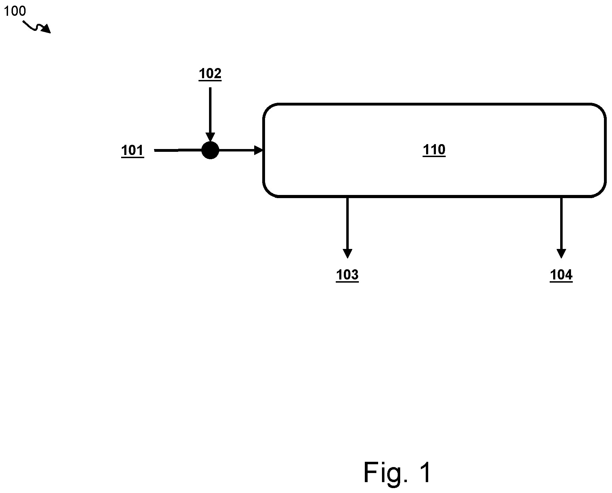

Fig. 1 shows an example of a solid-liquid separation process 100. A solid-liquid separation process 100 separates solid phase particles from a liquid phase within a mixture or slurry. To this end, a feed mixture or feed slurry 101 is typically provided as input to a solid-liquid separation system 110 configured to separate the feed mixture 101 into a liquid effluent 103 and a solid residue 104. The solid-liquid separation process 100 may for example be, amongst others, based on filtration, sedimentation, centrifugation, flotation, or flocculation. The solid-liquid separation system 110 may, for example, be a centrifuge, a decanter centrifuge, a thickening table, a filter press, a screw press, or a gravity thickener. Solid-liquid separation is an essential process in various industries, e.g. wastewater treatment, mining, chemical manufacturing, and food processing. These industries typically have a need to isolate solids from liquids for further processing, disposal, or further utilization. Regardless of the industry or application, it is desirable to achieve efficient separation of the solid phase from the liquid phase.

To this end, polyelectrolyte flocculants 102 may sometimes be added to the feed mixture 101 to improve the separation through flocculation, e.g. in sludge dewatering. Polyelectrolyte flocculants, sometimes also referred to as polyelectrolyte coagulants, are polymers that typically have ionic charge along their chain. They bind the suspended solid particles within the feed mixture 101 together, thereby making it easier to separate the solid particles from the liquid. This can improve the separation process 100 by reducing energy consumption, reducing operational costs, and providing a cleaner effluent 103.

However, adding an excessive amount of polyelectrolyte flocculants 102 results in the presence of unbound polyelectrolyte flocculants in the effluent 103, which is typically undesired. A large residual polyelectrolyte flocculant concentration in the effluent 103 is thus an indicator that polyelectrolyte dosing 102 is not scaled correctly in relation to the feed mixture 101. On the other hand, a high total suspended solids, TSS, concentration in the effluent 103 is an indicator of a sub-optimal or inefficient separation process. As such, a reliable and accurate measurement of the residuals within the effluent 103 of a separation process is desirable.

Optical sensors, microwave sensors, or streaming current meters may be used to determine the concentration of residuals in fluids. However, optical sensors have the problem that they fail to accurately measure the concentrations in variable conditions due to their dependence on the optical parameters of the effluent flow 103. It is a further problem that optical sensors and streaming current meters are sensitive to fouling deposits that built up on the sensor surface. Solutions to remove this fouling, e.g. mechanical wipers, are typically prone to faults and malfunctioning. Optical sensors and streaming current meters also tend to drift and require frequent calibration. Microwave sensors are expensive and difficult to install, in particular in larger tubing diameters, and may not work in open channels.

Ultrasonic sensors can also be used to determine the concentration of residuals in fluids. They do so based on acoustic properties of a mixture, i.e. based on the ultrasonic echo resulting from emitting an ultrasonic pulse within the mixture. However, effluent flows 103 are typically characterised by a large amount of suspended air bubbles. These air bubbles may unintentionally be introduced during the solid-liquid separation by for example, mechanical mixing, mechanical stirring, mechanical agitation, pressure changes, air ingress, leakage, or cavitation. The air bubbles may also be intentionally introduced during the solid-liquid separation process by, for example, injecting air to enhance separation. This is a problem as the suspended air bubbles cause strong scattering of acoustic waves. Moreover, their scattering depends on the size of the air bubbles. As such, air bubbles affect the ultrasonic echo in an unpredictable manner. Therefore, it is very challenging to determine the concentration of residuals in an effluent flow 103 based on acoustic properties of the effluent flow 103. It is a further challenge that the effluent 103 typically has a high capacity for depositing fouling on contact surfaces.

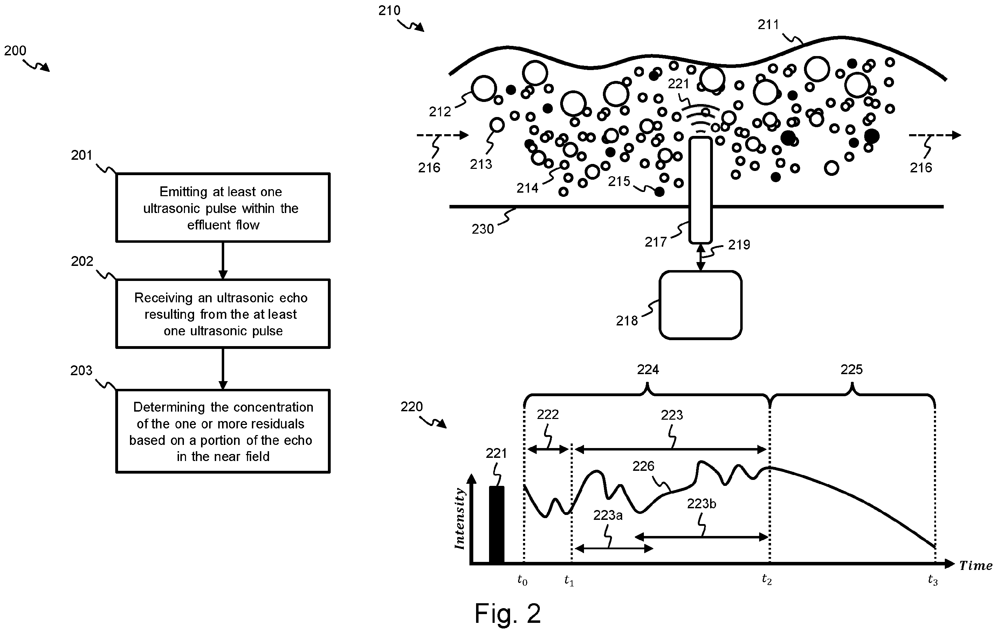

Fig. 2 shows steps 200 of a method for determining the concentration of one or more residuals 215 within an effluent flow 211 of a solid-liquid separation process based on acoustic properties of the effluent 211 that solves or alleviates the above-mentioned problems and challenges.

In a first step 201, at least one ultrasonic pulse 221 is emitted within the effluent flow 211. To this end, an ultrasonic transducer 217 is at least partially immersed within the effluent flow 211. The effluent flow 211 comprises air bubbles 212, 213, 214 of different sizes. These air bubbles may, for example, be micro air bubbles having a diameter between around 1 micron to at most around 1000 microns. The effluent 211 may further comprise one or more residuals 215 due to sub-optimal operation of a solid-liquid separation process as discussed in relation to Fig. 1. The one or more residuals 215 may include suspended solid particles the process failed to separate from the liquid of the feed mixture, or polyelectrolyte flocculants that failed to bind with the solid phase particles within the feed mixture. The ultrasonic transducer 217 may be any ultrasonic transducer suitable for continuous immersion in liquids, e.g. an immersion transducer. The ultrasonic transducer 217 may be substantially resistant to chemical and physical external influences. As the ultrasonic transducer 217 is at least partially immersed within the effluent flow 211, the emitted ultrasonic pulse 221 travels through the effluent flow 211 where it interacts with the one or more residuals 215 and the air bubbles 212 - 214.

In a following step 202, the ultrasonic transducer 217 receives an ultrasonic echo 226 resulting from this interaction between the ultrasonic pulse 221 and the residuals 215 and air bubbles 212 - 214. The ultrasonic echo 226 can be divided into an ultrasonic near field 224 and an ultrasonic far field 225. The ultrasonic near field 224 refers to the region closest to the ultrasonic transducer 217. The ultrasonic far field 225 refers to the region beyond the ultrasonic near field 224. Within the ultrasonic far field 225, the echo 226 mainly comprises backscattering that gradually diminishes as the ultrasonic wave spreads out in a conical fashion through the effluent flow 211. Within the ultrasonic near field 224, the echo 226 may comprise near-field pressure oscillations and backscattering. The near-field pressure oscillations are a result of different parts of the ultrasonic transducer 217 emitting waves at slightly different phases, thereby leading to local interference close to the transducer 217, i.e. in the near field 224. The resulting interference patterns are characteristic for the used transducer 217 at a given operation condition.

The air bubbles 212 - 214 cause strong scattering of the emitted ultrasonic pulse 221, in particular at their harmonic frequencies. The harmonic frequencies of the respective bubbles 212 - 214 depend on the size of the respective bubbles. It will be apparent that, while Fig. 2 only shows three bubble sizes 212 - 214, in reality their may be a much greater number of different air bubble sizes. This makes the echo 226 received by the ultrasonic transceiver 217 unpredictable and variable in time, as the amount and size distribution of the air bubbles 212 - 214 within the measurement zone of the ultrasonic transducer 217 can vary greatly in time by the flowing of the effluent 211. In other words, the interference of the air bubbles 212 - 214 within the ultrasonic echo 226 is variable in time and unpredictable in magnitude.

To this end, the ultrasonic pulse 221 is emitted in step 201 at an emission frequency that exceeds at least one fundamental resonant frequency of the air bubbles 212 - 214 within the effluent flow 211. This avoids, or at least limits, harmonic resonance of the air bubbles 212 - 214. In doing so, a more stable and more predictable effect of the air bubbles 212 - 214 on the ultrasonic echo 226 is achieved as the backscattering of the air bubbles 212 - 214 is more constant. In other words, the interference of the air bubbles 212 - 214 within the ultrasonic echo 226 is more stable and predictable. This allows accounting for the interference of the air bubbles 212 - 214 more easily when determining the concentration of the one or more residuals from the ultrasonic echo. The ultrasonic pulse 221 may further be emitted at a low power such that the ultrasonic power released into the effluent flow 211 remains limited, thereby avoiding substantially affecting the properties of the effluent 211.

As the resonant frequency of air bubbles 212 - 214 decrease with increasing bubble size, the emission frequency of the at least one ultrasonic pulse 221 may preferably exceed the fundamental resonant frequency associated with the most common air bubble size within the effluent flow 211. More preferably, the emission frequency may exceed the fundamental resonant frequency associated with the smallest air bubble size 214 within the effluent flow 211. In doing so, the emission frequency also exceeds the resonant frequency of the larger air bubbles 212, 213 and, thus, of all air bubbles within the effluent flow.

The ultrasonic transducer 217 may further be positioned in a gravitationally lower section of the effluent flow 211, as illustrated in Fig. 2. The ultrasonic transducer 217 may thus be positioned such that the immersed portion of the transducer is located in a lower section of the effluent flow 211 relative to the gravitational field of Earth, i.e. lower along the gravitational vector. For example, transducer 217 may be positioned in a lower portion of a horizontal tube 230 or channel through which the effluent 211 flows substantially horizontally 216. In doing so, the larger air bubbles 212 will be located further from the ultrasonic transducer, e.g. closer to the effluent surface, due to their greater buoyancy. The smaller air bubbles 213, 214 will be located closer to the ultrasonic transducer 217. As such, the air bubbles passing within the measurement zone of the ultrasonic transducer 217 may vary less in size. This further allows accounting for the interference of the air bubbles more easily, as it reduces the variation in the size of the air bubbles that pass through the measurement zone of the ultrasonic transducer 217, thereby making their interference more stable and predictable.

In a following step 203, a data processing unit 218 determines the concentration of the one or more residuals 215 within the effluent flow 211 based on a portion 223 of the ultrasonic echo 226 within the ultrasonic near field 224. Typically, the ultrasonic near field 224 is dominated by complex non-uniform behaviour. Therefore, existing ultrasonic measurement techniques typically prefer analysing the ultrasonic far field 225. However, focusing on the near field 224 of the echo 226 allows accounting for the interference of the air bubbles 212 - 214 more easily as the scattering of the ultrasonic pulse is more significant in the far field 225. As such, less energy will be reflected back to the ultrasonic transducer 217 by air bubbles 212 - 214 located in the far field 225. In other words, an echo originating from the far field 225 experiences relatively more scattering due to air bubbles 212 - 214 as the ultrasonic pulse 221 travels a longer distance through the medium 211, resulting in a lower signal to noise ratio.

The portion 223 of the echo 226 within the ultrasonic near field 224 based upon which the concentration is determined in step 203 may depend on the type of residuals 215 for which the concentration is determined. The residuals 215 may be unbound polyelectrolyte flocculants, suspended solid particles, or both.

Determining the concentration of unbound polyelectrolyte flocculants may be based on the near-field pressure oscillations within the ultrasonic echo 226. In other words, the portion of the ultrasonic echo 226 within the near field 224 upon which the determining of step 203 is based may correspond to the near-field pressure oscillations, e.g. portion 223a, when determining the concentration of unbound polyelectrolyte flocculants. The local interference patterns characteristic for the ultrasonic transducer 217 may be influenced by the presence of polyelectrolyte flocculants due to their chain length, viscoelastic properties, and ionic charge. These local interference patterns may be shifted and modified depending on the concentration of polyelectrolyte flocculants. Therefore, the interference patterns of the near-field pressure oscillations in portion 223a can be related to the amount of unbound polyelectrolyte flocculants present within the near field 224. Thus, the change in the local interference pattern allows to determine the concentration of the polyelectrolyte flocculants in the effluent flow 211. To this end, the ultrasonic transducer 217 may be responsive to frequencies attenuated by the polyelectrolyte flocculants expected to be present in the flow 211, e.g. flocculants added to the solid-liquid separation process. This allows monitoring the efficiency of a liquid-separation process as the concentration of polyelectrolyte flocculants in the effluent flow is indicative of the effectiveness of the flocculation, the dosing of flocculants, and separation efficiency. It is thus an advantage that this can allow improving the efficiency of a solid-liquid separation process by improving the dosing of the polyelectrolyte flocculants and/or the separation process, thereby reducing operational costs. Monitoring the concentration of polyelectrolyte flocculants may further allow capturing and recycling the flocculants when present. This has the advantage that discharge of environmentally damaging flocculants can be avoided.

Determining the concentration of suspended solid particles may be based on the ultrasonic backscattering within the ultrasonic echo 226 within the ultrasonic near field 224. In other words, the portion of the ultrasonic echo 226 within the near field 224 upon which the determining of step 203 is based may correspond to the backscattering within the near field 224, e.g. portion 223b, when determining the concentration of suspended solid particles. It will be apparent that the concentration of suspended solid particles may refer to a concentration of a solid phase in the effluent flow 211 that is substantially independent of the particle size distribution, i.e. it may refer to a total suspended solid, TSS, measurement; a total suspended matter, TSM, measurement; or a suspended particulate matter, SPM, measurement. This allows monitoring the efficiency of a liquid-separation process as the concentration of suspended solid particles in the effluent flow is indicative of the process' effectiveness in separating the solid and liquid phases. It is thus an advantage that this can allow improving the efficiency of a solid-liquid separation process thereby reducing operational costs and potential loss of valuable solids. The wavelength of the at least one ultrasonic pulse 221 may be at least equal to a size of the suspended solid particles 215. This ensures effective scattering of the ultrasonic pulse 221 by the one or more suspended solid particles 215 and ensures that the backscattering can be received by the ultrasonic transducer 217.

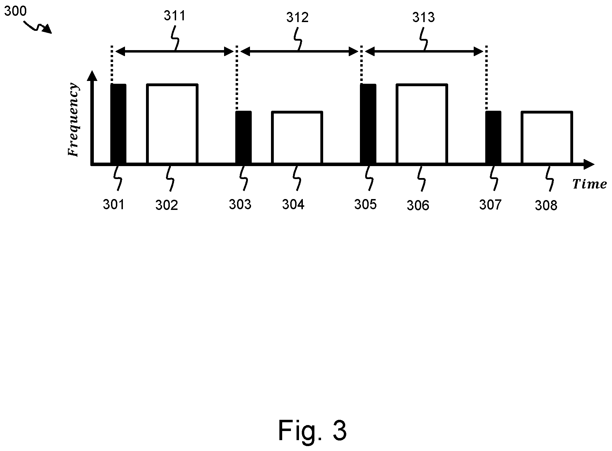

In order to determine both the concentration of polyelectrolyte flocculants and the concentration of suspended solid particles, the method may further comprise emitting ultrasonic pulses at two distinct emission frequencies. Fig. 3 shows an example of emitted ultrasonic pulses 301, 303, 305, 307 in time, according to embodiments. A first ultrasonic pulse 301 may be emitted at a first emission frequency for determining the concentration of polyelectrolyte flocculants. The first emission frequency may, for example, be around 15MHz. After receiving the ultrasonic echo 302 resulting from the first ultrasonic pulse 301, a second ultrasonic pulse 303 may be emitted at a second emission frequency for determining the concentration of the suspended solid particles. The second emission frequency may, for example, be around 10MHz.

According to an example embodiment, the ultrasonic pulses 301, 303 may be repeatedly emitted by the ultrasonic transducer. Fig. 3 illustrates an example wherein the first pulse 301 and the second pulse 303 are repeated alternately, i.e. by emitting pulses 305 and 307. This allows to monitor the evolution in time of the concentration of both the polyelectrolyte flocculant and the suspended solid particles based on a portion of the respective echoes 302, 304, 306, 308. It will be apparent that Fig. 3 illustrates an example wherein the first 301, 305 and second pulses 303, 307 are emitted as an alternating sequence with a 1:1 ratio, but that any ratio is possible. The first pulse at the first emission frequency may, for example, be repeated three times for every second pulse at the second emission frequency that is emitted, i.e. an alternating sequence with a 3:1 ratio. It will further be apparent that 'first' and 'second' merely distinguish between the pulses 301, 305 for determining the polyelectrolyte flocculant concentration and the pulses 303, 307 for determining the suspended solid particles, and do not specify an order in which the pulses 301 - 307 are to be emitted.

The repeatedly emitted pulses 301, 303, 305, 307 are preferably separated in time by inter-pulse intervals 311, 312, 313 that have a sufficient length as to avoid interference between the respective ultrasonic pulses 301, 303, 305, 307 and the resulting ultrasonic echoes 302, 304, 306 of the preceding ultrasonic pulse. For example, pulse 305 may be emitted an inter-pulse interval 312 after emitting pulse 303 such that the next pulse 305 does not overlap with echo 304. A sufficient length for the inter-pulse intervals may, for example, be 1ms. This has the further advantage that the ultrasonic power emitted within the effluent flow remains limited, thereby avoiding substantially affecting the properties of the effluent.

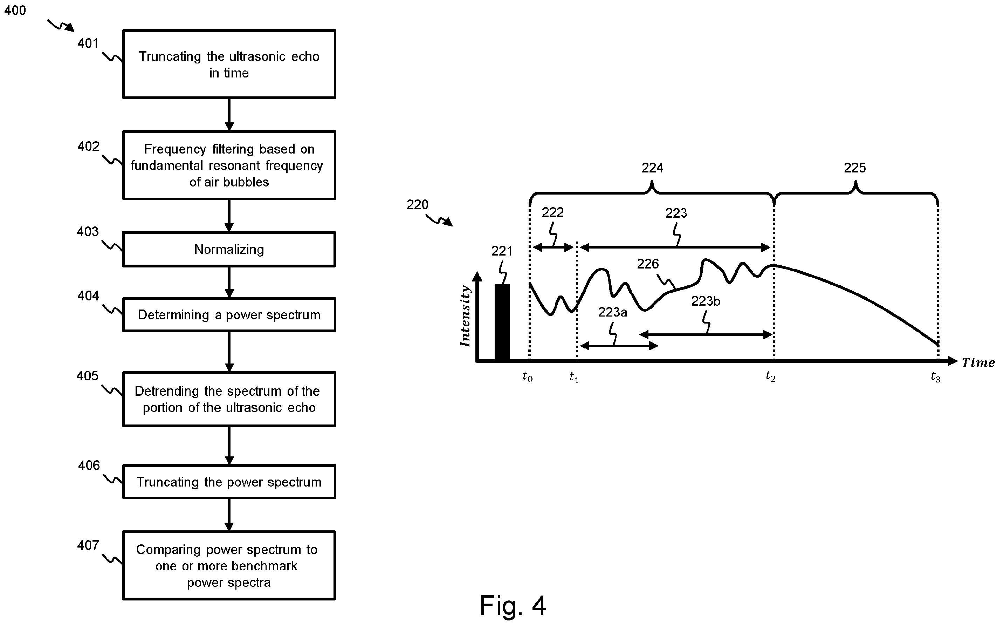

Fig. 4 shows further steps 400 for determining the concentration of residuals within an effluent flow of a solid-separation process based on acoustic properties of the effluent, according to embodiments. Steps 400 may be performed by a data processing system during step 203 as discussed in relation to Fig. 2. It will be apparent that steps 400, and any other step performed to determine the concentration of residuals based on a portion of the echo 226 according to the present disclosure, may be performed on an analogue electrical signal generated by the ultrasonic transducer upon receiving the echo 226 or may be performed on a digital signal generated by converting the analogue electrical signal.

The first step 401 may comprise truncating the ultrasonic echo 226 in time. Truncating a signal refers to the process of omitting a portion of a signal, typically at its beginning and/or end. Echo 226 may be truncated in time such that a first portion 222 of the echo 226 is omitted, i.e. a portion directly following the reception time *t*₀ of the echo 226. This first period 222 may correspond to fouling deposits on the immersed surface of the ultrasonic transducer. Omitting or ignoring this first period 222 therefore allows accurately determining the concentration of one or more residuals within the effluent flow regardless of fouling deposits that have built up on the ultrasonic transducer surface. This has the advantage that cleaning and/or maintenance of the ultrasonic transducer is limited, e.g. compared to optical sensors or microwave sensors. The first period 222 may, for example, include the echo received within the first 10µs after the start of reception of the echo 226.

Alternatively or complementary, echo 226 may be truncated in time such that a trailing portion 225 is omitted. The omitted trailing portion 225 may correspond to the ultrasonic far field such that the remaining portion 223 corresponds substantially to the ultrasonic near field 224. To this end, the start point *t*₂ of the trailing portion 225 may be determined by first determining the distance N between the ultrasonic transducer and the start of the far field 225 as $N = \frac{{D}^{2}}{4 λ}$ wherein D represents the diameter of the ultrasonic transducer and λ represent the wavelength of the emitted ultrasonic pulse. The wavelength λ can be determined as *λ = c*/*f,* wherein *c* is the speed of sound in the medium and *f* the emission frequency. The time *t*₂ corresponding to the start of the far field may then be determined as ${t}_{2} = \frac{2 N}{c}$. For example, the distance between the ultrasonic transducer and the start of the far field N may be 27mm for an ultrasonic transducer with a diameter of 4mm that emits an ultrasonic pulse at 10MHz within water with c = 1480m/s. As such, the resulting echoes may be truncated as to omit the trailing portion 225 starting after ${t}_{2} = \frac{2 ∗ 0.027 m}{1480 m / s} = 36 μs$*.*

It will be apparent that echo 226 may be truncated such that the maintained portion corresponds to portion 223a, 223b, or 223 depending on whether the concentration of unbound polyelectrolyte flocculants, suspended solid particles, or both are determined, respectively.

In a next step 402, the echo 226 may be frequency filtered based on the fundamental resonant frequency of the air bubbles within the effluent flow. The frequency filtering may, for example, be achieved by applying a digital bandpass filter. The lower frequency *f_{low,bp}* of the bandpass filter may be determined by the ultrasonic transducer and/or the fundamental resonant frequency of the air bubbles. The upper frequency *f_{up,bp}* of the bandpass filter may depend on the used ultrasonic transducer, e.g. the highest frequency at which the transducer can emit or receive ultrasonic waves. This can allow removing parasitic contributions to the signal.

In a following step 403, the truncated signal itself may be normalized prior to determining a power spectrum in step 404. This allows removing the stable and predictable contribution of the air bubble interference to the ultrasonic echo 226. In a next step 404, the power spectrum of portion 223, 223a, 223b may be determined. The power spectrum is indicative for the distribution of power or variance of the ultrasonic echo across different frequencies. Alternatively or complementary, the spectral content of the truncated signal, i.e. the determined power spectrum of portion 223, 223a, 223b, may be normalized. In other words, the determined power spectrum may be normalized after performing step 404 instead of, or in addition to, normalizing the portion 223, 223a, 223b of the echo in step 403.

In a following step 405, the spectral content of the truncated signal, i.e. portion 223, 223a, 223b of echo 226, may further be detrended. This can be achieved by performing second-order detrending. This allows removing quadratic trends from the ultrasonic echo, thereby accounting for the more stable and predictable interference of the air bubbles within the ultrasonic echo 226. Alternatively, first-order detrending may be performed.

Thereafter, in step 406, the power spectrum may further be truncated. This may be achieved by defining a lower limit frequency *f_{low,power}* and an upper limit frequency *f_{up,power}* falling within the previously filtered frequency range, i.e. *f_{low,bp} < f_{low,power} < f_{low,power} < f_{up,bp}.* The lower limit *f_{low,bp}* may be determined as the frequency at which the ultrasonic transducer shows sensitivity to the scattering of the ultrasonic wave in the echo 226 beyond the near field 224. The upper limit *f_{up,bp}* may be the highest possible frequency that can travel through the effluent flow.

In a final step 407, the power spectrum of portion 223, 223a, 223b of the echo 226 may be compared with one or more benchmark power spectra. A benchmark power spectrum is indicative of the ultrasonic echo 226 within an effluent flow having a predetermined concentration of the one or more residuals. The benchmark power spectra may, for example, be obtained by performing a calibration of the ultrasonic transducer during which one or more ultrasonic pulses are emitted into an effluent flow with a known concentration of residuals. The resulting ultrasonic echoes may be processed as described in relation to Fig. 2 and Fig. 4 to obtain the benchmark power spectra. This allows determining a relationship between the power spectrum of portion 223, 223a, 223b and the concentration of the residuals. Based on this relationship and the determined power spectrum during operation, the concentration of the residuals may thus be determined.

Preferably, a relationship between the spectral power of the one or more benchmark power spectra and the concentration of residuals may be determined. The method may thus further comprise determining a spectral power of the power spectrum of portion 223, 223a, 223b and determining the concentration of one or more residuals based on this spectral power and the determined relationship. The spectral power may, for example, be linearly correlated with the concentration of a residual.

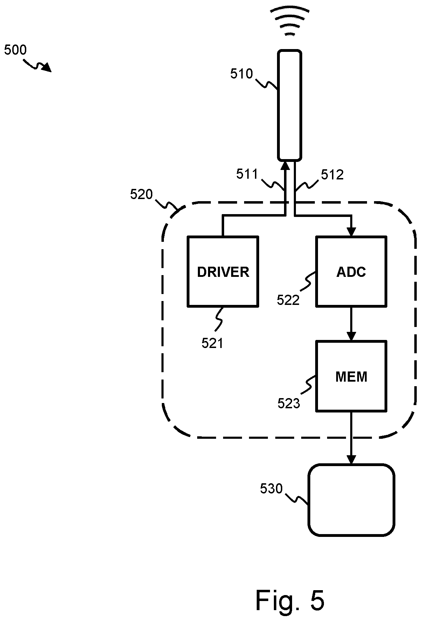

Fig. 5 shows a system 500 configured to determine a concentration of one or more residuals within an effluent flow of a solid-liquid separation process based on acoustic properties of the effluent, according to example embodiments. The system may comprise at least one ultrasonic transducer 510. The ultrasonic transducer 510 may be configured to be at least partially immersed within an effluent flow, e.g. an immersion transducer. The ultrasonic transducer 510 may be further configured to emit at least one ultrasonic pulse at an emission frequency that exceeds at least one fundamental resonant frequency of the air bubbles within the effluent flow. The emission frequency may depend on the residuals for which the concentration is to be determined. The emission frequency may, for example, be 10MHz for determining the concentration of suspended solid particles. The emission frequency may, for example, be 15MHz for determining the concentration of polyelectrolyte flocculants. Ultrasonic transducer 510 may thus be capable to emit ultrasonic waves at both of these frequencies and to receive an ultrasonic echo resulting from these waves. Alternatively, system 500 may comprise a plurality of ultrasonic transducers specifically tuned and configured for determining the concentration of a specific residual, e.g. one transducer for monitoring polyelectrolyte flocculants and one transducer for monitoring suspended solid particles.

System 500 may further comprise an ultrasonic interface module 520 configured to drive 511 the at least one ultrasonic transducer 510 by means of an electrical pulse. To this end, interface module 520 may comprise a driver circuitry 521 configured to generate electrical pulses and to provide those electrical pulses to the ultrasonic transducer 510. The generated electrical signal 511 may excite a piezoelectric element within the transducer 510 that emits the ultrasonic pulse. The generated electrical signal 511 may form a square wave with a specified pulse length, e.g. 50ns, 100ns, 125ns, or 250ns, and a specified amplitude, e.g. 24V, 48V, or 72V. The pulse length is determined by the desired emission frequency of the ultrasonic transducer 510.

The at least one ultrasonic transducer 510 may further be configured to receive an ultrasonic echo resulting from the at least one ultrasonic pulse. Both the near-field pressure oscillations and the backscattering of the ultrasonic pulse may be received and converted into an analogue electrical 512 signal by the transducer 510. This analogue signal 512 may be transmitted to an analogue-to-digital, ADC, converter 522 within interface 520. The ADC may be configured to convert the analogue signal of the ultrasonic echo into a digital signal. The system 500 may further comprise a data processing unit 530 configured to determine the concentration of the one or more residuals based on a portion of the ultrasonic echo, i.e. the digital or analogue signal, within the ultrasonic near field as described in relation to Figs. 2 - 4. This may be performed in substantially real-time, i.e. in a streaming manner, as the echo is received. Optionally, the converted digital signal may be stored in a memory 523 of the interface 520 before being processed by data processing unit 530.

As used in this application, the term "circuitry" may refer to one or more or all of the following:
(a) hardware-only circuit implementations such as implementations in only analogue and/or digital circuitry and
(b) combinations of hardware circuits and software, such as (as applicable):
   (i) a combination of analogue and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for determining a concentration of one or more residuals (215) within an effluent flow (211) of a solid-liquid separation process based on acoustic properties of the effluent, wherein the effluent flow comprises air bubbles (212, 213, 214); the method comprising:
- by an ultrasonic transducer (217) that is at least partially immersed within the effluent flow, emitting (201) at least one ultrasonic pulse (221) at an emission frequency that exceeds at least one fundamental resonant frequency of the air bubbles within the effluent flow;
- by the ultrasonic transducer (217), receiving (202) an ultrasonic echo (226) resulting from the at least one ultrasonic pulse; wherein the ultrasonic echo comprises near-field pressure oscillations and ultrasonic backscattering; and
- determining (203), by a data processing unit (218), the concentration of the one or more residuals (215) based on a portion (223) of the ultrasonic echo within the ultrasonic near field (224).

2. The method according to claim 1, wherein the one or more residuals (215) within the effluent flow (211) include one or more polyelectrolyte flocculants, and wherein determining (203) the concentration of the one or more polyelectrolyte flocculants is based on the near-field pressure oscillations (223a) within the ultrasonic echo (226).

3. The method according to claim 2, wherein the ultrasonic transducer (217) is responsive to frequencies attenuated by the one or more polyelectrolyte flocculants.

4. The method according to any of the preceding claims, wherein the one or more residuals (215) within the effluent flow include one or more suspended solid particles, and wherein determining (203) the concentration of the one or more suspended solid particles is based on the ultrasonic backscattering (223b) within the ultrasonic near field (224) of the ultrasonic echo (226).

5. The method according to claim 4, wherein a wavelength of the at least one ultrasonic pulse (221) is at least equal to a size of the one or more suspended solid particles.

6. The method according to claim 2 and 4, further comprising, by the ultrasonic transducer (217), emitting a first ultrasonic pulse (301, 305) at a first emission frequency for determining the concentration of the one or more polyelectrolyte flocculants; and emitting a second ultrasonic pulse (303, 307) at a second emission frequency for determining the concentration of the one or more suspended solid particles.

7. The method according to any of the preceding claims, further comprising, by the ultrasonic transducer (217), repeatedly emitting ultrasonic pulses (301, 303, 305, 307) at inter-pulse intervals (311, 312, 313); wherein the inter-pulse intervals have a sufficient length as to avoid interference between the respective ultrasonic pulses (303, 305, 307) and the ultrasonic echo (302, 304, 306) resulting from a preceding ultrasonic pulse.

8. The method according to any of the preceding claims, further comprising, by the data-processing unit (218), omitting a first period (222) of the ultrasonic echo (226) indicative for fouling deposits on the surface of the ultrasonic transducer (217).

9. The method according to any of the preceding claims, wherein the determining (203) further comprises determining (404) a power spectrum of the portion of the ultrasonic echo and comparing (407) the power spectrum with one or more power spectra indicative of the ultrasonic echo within effluent flows having respective predetermined concentrations of the one or more residuals.

10. The method according to any of the preceding claims, wherein the at least one ultrasonic pulse (221) is a low power ultrasonic pulse.

11. The method according to any of the preceding claims, further comprising positioning the ultrasonic transducer (217) in a gravitationally lower section of the effluent flow (211).

12. The method according to any of the preceding claims, further comprising, by the data-processing unit (218), detrending (405) the spectrum of the portion (223) of the ultrasonic echo (226).

13. The method according to any of the preceding claims, further comprising, by the data-processing unit (218), normalizing (403) the portion (223) of the ultrasonic echo (226) and/or normalizing (403) the spectrum of the portion of the ultrasonic echo.

14. A system (500) configured to determine a concentration of one or more residuals within an effluent flow of a solid-liquid separation process based on acoustic properties of the effluent, wherein the effluent flow comprises air bubbles; the system comprising:
- at least one ultrasonic transducer (510) configured to be at least partially immersed within the effluent flow, and configured to emit at least one ultrasonic pulse at an emission frequency that exceeds at least one fundamental resonant frequency of the air bubbles within the effluent flow; and wherein the ultrasonic transducer is further configured to receive an ultrasonic echo resulting from the at least one ultrasonic pulse; wherein the ultrasonic echo comprises near-field pressure oscillations and ultrasonic backscattering; and
- a data processing unit (530) configured to determine the concentration of the one or more residuals based on a portion of the ultrasonic echo within the ultrasonic near field.

15. The system according to claim 14, further comprising an ultrasonic interface module (520) configured to drive (511) the ultrasonic transducer by means of an electrical pulse and further configured to convert the ultrasonic echo (512) received by the ultrasonic transducer (510) to a digital signal.
